# EUROPEAN PATENT APPLICATION

(11) **EP 1 376 345 A2**
(43) Date of publication of application: **02.01.2004**
(21) Application number: 03014179.0
(22) Date of filing: 24.06.2003
(51) Int. Cl.: G06F 9/445

(54) **System and method for installing a software application in a non-impactfull manner**

(30) Priority: 27.06.2002 US 184710
(71) Applicant: MICROSOFT CORPORATION, Redmond, Washington 98052 (US)
(72) Inventor: Canter, Adriaan W., Seattle, Washington 98103 (US); Dunn, Michael, Redmond, Washington 98052 (US); Parthasarathy, Srivatsan, Bellevue, Washington 98006 (US)
(74) Representative: Grünecker, Kinkeldey, Stockmair & Schwanhäusser Anwaltssozietät

(57) **Abstract**

Described is a mechanism for enabling installable software applications from a remote location without impacting already-installed software applications. The invention provides a mechanism for installing applications that include completely self-describing components. Each component of an application is then identified in an application manifest, which is stored in conjunction with the application. The application manifest also includes information describing the various dependencies of each component of the application. A remote user interested in the application may download the application, as described by the application manifest, to a local storage location. Any shared components of the application are also shared, except that any existing applications that may have depended on a previous version of the shared components continue to depend on the previous version. Different versions of an application are stored locally side-by-side.

## Description

### Background of the Invention

Software developers are constantly striving to simply the software development process. One way to do this is to reuse code whenever it makes sense to do so. For instance, very many software applications prompt the user with a dialog box to open a file. The tasks performed may be nearly identical across the several software applications, yet each one must have access to code for presenting the user with the dialog box. Rather than force software developers to independently create several unique dialog boxes, today those developers have access to shared libraries with common code, such as dialog boxes, that can be used instead. The use of shared libraries to reuse code greatly simplifies the development process and reduces the number of errors that may be introduced through human error. Although better than totally custom software, the use of shared libraries is not without problems.

When multiple software applications are written that take advantage of a shared library, each becomes dependent on that shared library being available in the state in which the software application expects. Any change to the shared library could, and often does, result in unpredictable behavior by the software application that references the shared library. This chills the development of enhancements to code that is likely to be shared by many software applications. There is a disincentive to provide upgrades or modifications to shared libraries, even if the upgrade is to fix a bug in the code, because the upgrade may cause other software applications to stop functioning properly. It is impossible to test a piece of shared code in every situation that it may encounter because each new software application creates another, previously non-existent situation.

These difficulties associated with shared libraries have increased the difficulty of installing or upgrading software applications. A software application could at one time be installed or upgraded without fear of impacting other software applications. However, with shared libraries, that is no longer the case. In today's environment, installing an application that includes a shared library may cause another software application to malfunction if that other software application depended on the shared library. It is often difficult to tell exactly what impact even the slightest change to a shared library may have on other applications. This is one reason that installing or upgrading applications is typically not performed automatically. Typically, installations and upgrades are performed with user intervention and, perhaps more importantly, with a warning to the user that the transaction may cause unexpected results in other applications. These warnings are generally disconcerting to users, especially unsophisticated users that are unaware of why such an event might occur or how to remedy the problem.

These and other issues have made on-the-fly software installations and upgrades difficult to achieve. Users have been slow to accept the simplicity of downloadable software that installs and executes with a single click of a hyperlink on a Web page for fear (at least partially) that their existing applications will break. Software developers have been slow to offer such downloadable software out of the same fear. Existing mechanisms for downloading and installing software has not eliminated those fears.

Nor do alternatives to downloading and installing software seem to be achieving much acceptance in the industry. For example, the hosted application concept essentially means that applications are stored and installed on a server that is remotely accessible. A client computer can connect to the server and execute an application while only the user interface aspects of the application (e.g., keystrokes, mouse movement and clicks, and screen displays) are passed between the client computer and the server. However, this model has not yet achieved acceptance largely because of the relative performance impact suffered from executing an application over a network. The user experience is directly tied to the bandwidth of the connection between the client and the server, and if the network fails, the hosted application is completely useless. Thus, the convenience of remotely managed software that can be downloaded and installed or upgraded easily has eluded the software community.

### Summary of the Invention

The present invention is directed at enabling installable software applications from a remote location without impacting already-installed software applications. The invention provides a mechanism for installing applications that include completely self-describing components. Each component of an application is then identified in an application manifest, which is stored in conjunction with the application. The application manifest also includes information describing the various dependencies of each component of the application. A remote user interested in the application may download the application, as described by the application manifest, to a local storage location. Any shared components of the application are also shared, except that any existing applications that may have depended on a previous version of the shared components continue to depend on the previous version. Different versions of an application are stored locally side-by-side.

### Brief Description of the Drawings

FIGURE 1 is a functional block diagram overview of a distributed networking environment in which implementations of the invention may be embodied.
FIGURE 2 is a functional block diagram illustrating in detail an illustrative server that serves application code for installation on remote client computers, in accordance with the invention.
FIGURE 3 is a functional block diagram illustrating in an illustrative client computer that may retrieve and load applications from a server, in accordance with the invention.
FIGURE 4 is an illustrative screen display of that may be presented by Web browsing software enabling the download of a remote application, in accordance with one implementation of the invention.
FIGURE 5 is a logical flow diagram generally illustrating a process for retrieving and installing an application that is being made available over a network.
FIGURE 6 is a logical flow diagram generally illustrating a process for making an application self-described and available for download over a network, in accordance with one implementation of the present invention.

### Detailed Description of Embodiments of the Invention

The invention is directed at a manifest-based system and method for enabling downloadable software applications that may be installed without impacting existing software.

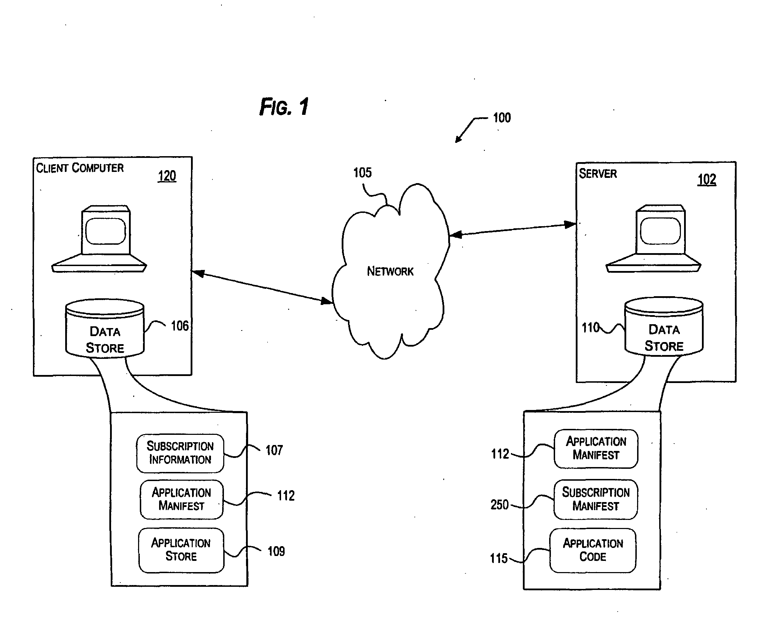

FIGURE 1 is a functional block diagram overview of a distributed networking environment 100 in which implementations of the invention may be embodied. As illustrated in FIGURE 1, two or more computers, such as a server 102 and a client computer 120, are connected over a network 105. The computers may be connected in a corporate environment, where the network 105 may be a local area network or a wide area network. Similarly, the computers may be arbitrarily connected over a wide area network, such as the Internet.

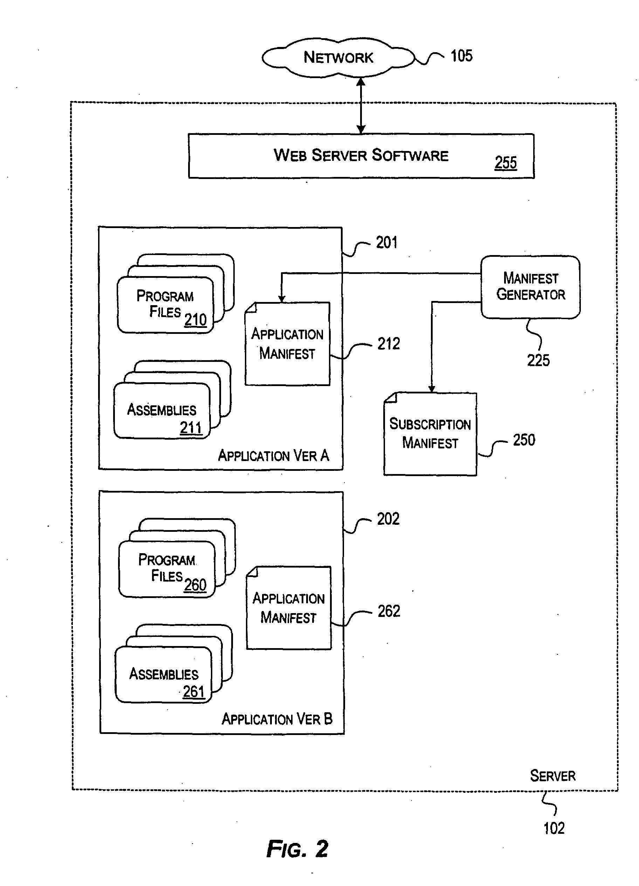

The server 102 is a computing system that is configured to make resources available to other computing systems connected to the network 105. The server 102 may include Web serving software to serve Internet related resources, such as HyperText Markup Language (HTML) documents and the like. The server 102 includes local storage in the form of a server data store 110. On the data store 110 are at least some of the resources made available by the server 102 over the network 105. In particular, application code 115 is stored on the data store 110, as well as an application manifest 112, which are both described in detail later in conjunction with FIGURE 2. The server 102 also includes other applications (detailed later) for maintaining the application code 115 and for constructing and maintaining the application manifest 112 as well as other related documents and resources. In this implementation, the server 102 makes the application code 115 and the application manifest 112 available over the network 105 to other computing systems.

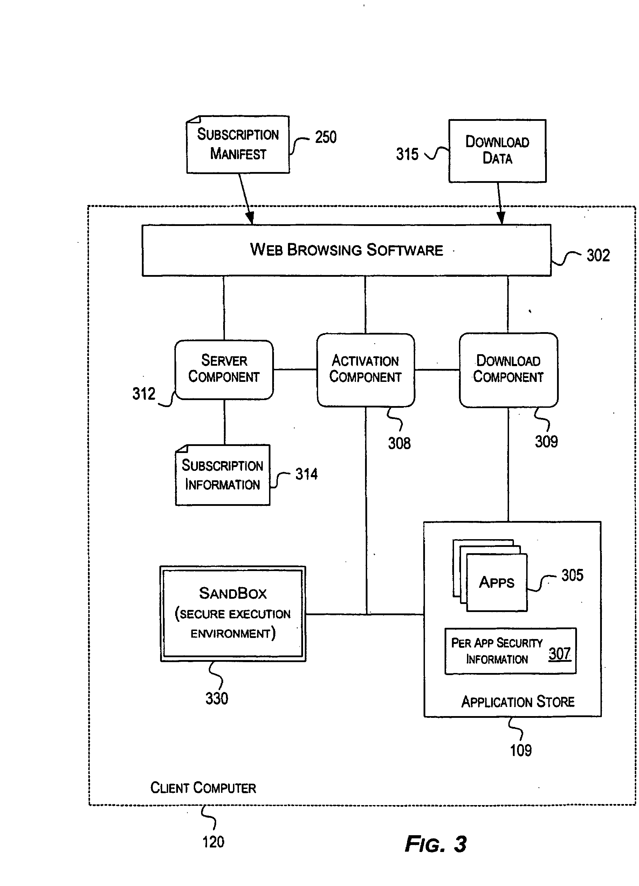

The client computer 120 is a computing system configured to execute locally-running applications as well as connect to other computers over the network 105. The client computer 120 also includes local storage in the form of a client data store 106. On the client data store 106 resides a local application store 109 and subscription information 107. The client computer 120 also includes other applications, not shown, for interacting with other computers over the network (e.g., Internet browsing software, and the like) and for maintaining the local application code 109 and the subscription information 107. The client computer 120 and each of its salient components will be described in greater detail below in conjunction with FIGURE 3.

Briefly stated, a user of the client computer 120 may connect to the server 102 in any conventional manner. The server 102 presents a Web page or some other resource that makes available files that reside on the server data store 110. In response to a selection of a link or the like by the user, the application manifest 112 is brought down to the client computer 120. The application manifest 112 uniquely identifies the application by a name, some identifier, and possibly a hash value associated with the application. The application manifest 112 describes the application code 115 in detail including each component, their versions and dependencies. After reviewing the application manifest 112, if the application code 115 has not been installed on the client computer 120, the application code 115 is brought down to the client computer 120 from the server 102 and installed.

In accordance with the invention, the application code 115 may be installed on the client computer 120 without fear of impacting existing software applications. Some computing systems today use "strong names" for each component of an application, where a strong name includes sufficient information about the component that it is uniquely identified from among other similar components. For example, the strong name of a component, such as a shared dynamic linked library, may include the version number of the component, the build number, and the like. The use of strong names gives components a globally unique identity, using digital signatures and public key.

Each application on the client computer 120 is sufficiently self-described that the dependencies of each component of each application are known (including their strong names). In addition, each component in the application code 115 is sufficiently described, including its dependencies, in the application manifest 112 that it may be determined whether a particular shared component of the application code 115 conflicts with any existing application on the client computer 120. To that end, every component of the application code 115 that does not already exist in its exact state on the client computer 120 is brought down from the server 102. Any existing code, shared or otherwise, is left untouched on the client computer 120. In this way, any existing application on the client computer 120 continues to operate in conjunction with the same shared components as before, and the newly downloaded application includes all the components that it needs to operate successfully. Only when the dependencies of an existing application are changed to reference a newer version of a shared component (as identified by strong name) will the existing application make use of the downloaded version of that shared component.

FIGURE 2 is a functional block diagram illustrating in greater detail an illustrative server 102 that serves application code for installation on remote client computers, in accordance with the invention. As illustrated, the server 102 includes two versions of an application, Application Version A 201, and Application Version B 202. Each version of the application includes several program files (210, 260), such as executable files, configuration files, and the like. Each version of the application may also include assemblies (211,261), which are dynamically linked libraries that may be shared among two or more application programs. Alternatively, the components of an application may be patches to be applied to existing components of an installed version of the application. The several components of the application may be stored in archived or compressed format (e.g., in CAB files or Zip format) to conserver storage space and reduce download bandwidth.

As described above, components within the application may be identified by strong names, which uniquely distinguish each component from other components. In particular, any assemblies 211, 261 that are to be shared are identified with a strong name. In this example, Application Version A 201 is being served by Web server software 255 to other computing systems over the network 105. The other version, Application Version B 202, is being stored on the server 102 for either future use or for archival purposes. Each version of the application is complete.

When invoked, the manifest generator 225 evaluates a selected version of the application, such as Application Version A 201, and identifies the dependencies among the several components. The manifest generator 225 then creates an application manifest 212 for the selected version of the application. In one implementation, the application manifest 212 is an eXtensible Markup Language (XML)-based document that identifies each of the components of the selected. application by its strong name, and may include additional information to help uniquely identify each component, such as a hash value, a public key token, or the like. A sample application manifest of such a nature is included with this document as "Appendix A - Sample Application Manifest." In another implementation, the application manifest 212 may be information packaged inside an entry point to an executable component of the application. Although described in this document as a specific file, the application manifest 212 of the invention should be interpreted to mean information describing the components of the application in any form and it may exist in locations other than just those described here. The application manifest 212 described here is by way of illustration only.

In addition, the manifest generator 225 may also create a default subscription manifest 250 that identifies which of the several versions of the application is currently being served by the Web server software 255. The subscription manifest 250 is another XML-based document that includes identification information (e.g., a Universal Resource Locator) pointing to the application manifest 212 of the current version of the application. A sample subscription manifest that may be employed by implementations of the invention is included with this document as "Appendix B - Sample Subscription Manifest."

The Web server software 255 may make available an HTML file, or other Web accessible page, that includes a hyperlink to the subscription manifest 250. In this way, a remote computer may access the HTML file, activate the hyperlink, get the subscription manifest 250, and then retrieve the current version of the application as identified in the subscription manifest 250. Thus, by simply modifying the subscription manifest 250 to identify another version of the application, a publisher can immediately begin serving the other version of the application. Because each version is complete and self-described, there is no fear that changing the current version will have a negative impact on other software applications once the new current version is retrieved and installed. The subscription manifest 250 may include other information as well, such as instructions on how often a consuming system should check for updates, when the check should occur, and the like.

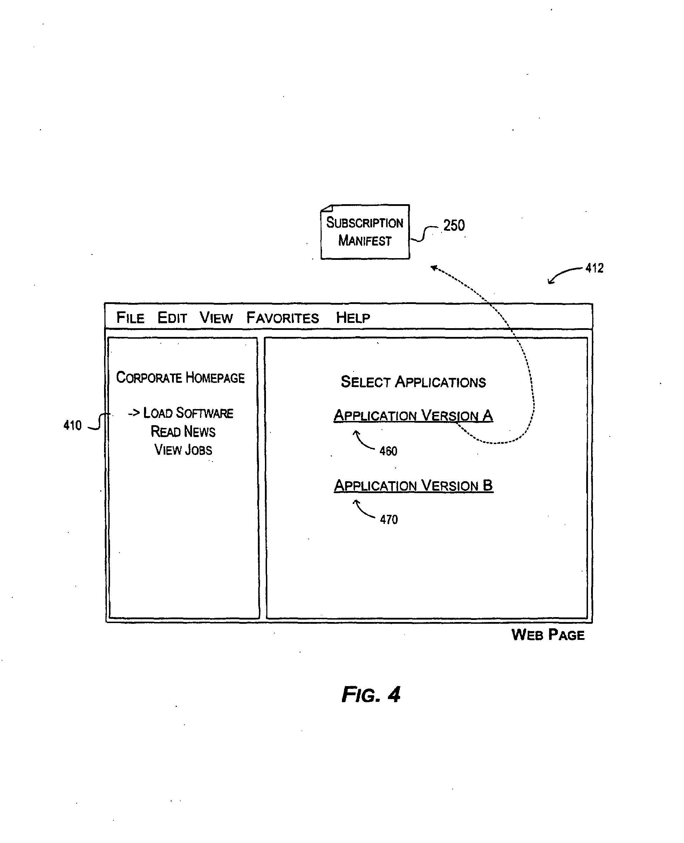

FIGURE 3 is a functional block diagram illustrating in greater detail an illustrative client computer 120 that may retrieve and load applications from a server, in accordance with the invention. The client computer 120 includes Web browsing software 302 that enables users to connect to remote locations over a network. Web browsing software 302 may be included as a component of an operating system or the like. In this example, Web browsing software 302 allows users of the client computer 120 to get a Web page or the like from a server, such as the server 102 described above, that includes a hyperlink to a subscription manifest 250. Turning briefly to FIGURE 4, an example display 412 of the Web browsing software 302 is shown including a Web page 410 that may be served by the server 102 described above. The Web page 410 may be a resource for making available software applications to remote computing systems for download. The Web page 410 includes a hyperlink 460 pointing to the subscription manifest 250 described above. Alternatively, the hyperlink 460 may be configured to point directly to the application manifest 212 rather than to the subscription manifest 250.

It will be appreciated that the Web page 310 may be provided over the Internet, a corporate intranet, or any other network-accessible location. Activating the hyperlink 460 causes the subscription manifest 250 to be pulled down from the server. It should be appreciated that the Web page 410 is only one way that the user may receive notice of the subscription manifest 250. For instance, a link to the subscription manifest 250 may be provided in an e-mail message, or the like. In another alternative, multiple hyperlinks (e.g., hyperlink 470) may also be provided that point to other versions of the application stored on the server 102. In this way, a user that does not desire the current version of an application may choose to retrieve and install an older or alternative version of the application.

Returning to FIGURE 3, once the subscription manifest 250 is retrieved, it is handed to an activation component 308 for processing. In this implementation, the activation component 308 is configured to parse the subscription manifest 250 and extract sufficient information to identify the corresponding application, such as the name, version, and location of the application. If the hyperlink 460 points directly to the application manifest 212, that information may be retrieved directly from the application manifest 212. With that information, the activation component 308 can query the local application store 109 to determine if the identified application is already stored locally on the client computer 120. The local application store 109 includes local copies of installed applications 305, as well as application specific security information 307. More particularly, as each application is downloaded, its associated URL is cached along with the application code. This is done so that the security privileges that were in effect when the application was installed continue to apply to instances of the application that are subsequently executed. For example, if an application is downloaded from a Internet location (as defined by its URL), then the security privileges that apply to the Internet zone may be applied to the application each time it is executed.

If the activation component 308 determines that the application identified in the subscription manifest 250 is not installed locally, the activation component 308 may hand off the information about the application to the download component 309. The download component 309 is configured to retrieve download data 315 associated with the application and to install the application locally. More specifically, the download component 309 may retrieve the application manifest 112 identified in the subscription manifest 250 and parse the application manifest 112 to identify the application components and dependencies. The download component 309 may then retrieve from the server 102 any of the application components that are not already stored locally. Note again that because each application component is identified by a strong name, only those local components that are identical to the components identified in the application manifest are used, and any other components are retrieved from the server 102. Similarly, the downloaded components may be patches that can be applied to installed components of the existing version of the application, further reducing the cost of the download. In the case where patches are downloaded from the server 102, it should be appreciated that the patches are applied to copies of the existing application components, but are then stored locally as a separate, new version of the application. This process maintains the side-by-side nature of each version of the application, while further reducing the download burden. Once the application components are downloaded, the download component 309 may validate any signatures associated with the components to authenticate them, perform hash checks to ensure that the correct components have been retrieved, and commit the application components to the application store 109. Alternatively, certain components may be identified to be downloaded on-demand, rather than immediately.

A digital rights management system may be implemented (either on the server 102, on the client computer 120, or both) that requires the download component 309 to validate information associated with the client computer 120 or the user to ensure that there is sufficient authorization to download and install the application. In addition, as part of the installation process, the user may be prompted with a license agreement as requested to purchase the application.

Although illustrated in FIGURE 3 as a single entity, the application store 109 may actually reside in multiple locations on the client data store 106. For example, the application store 109 may include a location where many application components are stored and another location (e.g., a global assembly cache) where shared components are stored.

Upon final commit of the application components to the local application store 109, the activation component 308 registers the application with a server component 312. The server component 312 is a local service that is responsible for periodically polling registered subscription manifests, such as subscription manifest 250, for changes to the subscribed applications. The server component 312 maintains subscription information 314 that identifies each subscribed application, the location of their subscription manifests, and an interval at which to determine whether the subscription manifest has changed. In one implementation, while the client computer 120 is idle, the server component 312 attempts to retrieve subscription manifests for the subscribed applications, and if any have changed, the changed subscription manifests are handed to the activation component 308 to automatically bring down any new versions of the subscribed applications.

Again, because each application is stored locally side-by-side, there are no conflicts between components in each application. Accordingly, new versions of an application may be downloaded and installed without impacting other installed applications. This in enabled through the use of strong naming components of the applications, as described above. Moreover, because of the side-by-side installation of the application locally, each application version is unique, which provides enhanced support for effective roll-back should the user desire to return to a previously used version. In short, because each application is independent of other applications, one may be uninstalled without fear of impacting another application in the same way that they may be installed without impacting existing applications.

It should be noted that the side-by-side installation envisioned by the invention is enabled by the strong names assigned to certain application components, especially shared components. Attempting side-by-side installations using conventional or traditional naming techniques, where components are not globally unique, may fail for a variety of reasons. For example, simply storing all of an application's components in one directory is less than satisfactory because it makes patching a shared component more difficult. If a component is shared by the installed application and other applications, then applying a patch to that component would also require locating all of the other instances of that shared component in order to apply the patch. Without being able to uniquely distinguish components (through strong names or some other mechanism) two or more of the same shared components that differ only by build number (for example) could not easily coexist in one shared component location. The invention overcomes these limitations.

After the subscription is registered, the activation component 308 passes control to a managed hosting component 330, which launches the application in a secure application domain (e.g., a "sandbox") based on the URL and security privileges of the location from where the application was retrieved. In addition, the application or components of the application may be digitally signed by a publisher. If so, the digital signature of the publisher may be used to provide the executing application with permissions beyond the sandbox. In other words, there may be security information stored on the client computer 120 that grants rights to applications from a particular publisher over and above the common permissions attached to sandboxed applications. The managed hosting component 330 may also provided for downloading of on-demand components and single-instancing of shared components.

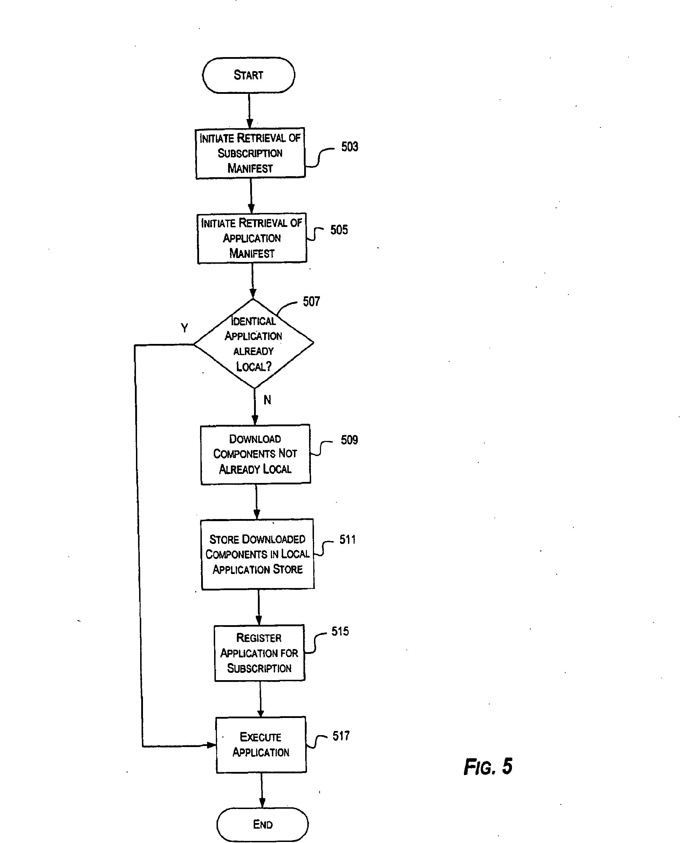

FIGURE 5 is a logical flow diagram generally illustrating a process for retrieving and installing an application that is being made available over a network. The process begins where a user has indicated a desire to install the application in some manner, such as by selecting a hyperlink related to the application. The process begins at block 503, where the retrieval of a subscription manifest associated with the application is initiated. In one embodiment, a hyperlink on a Web page points to the subscription manifest and the user indicates a desire to download and install the application by triggering the hyperlink, causing the subscription manifest to be downloaded to the client computer.

At block 505, an application manifest that includes information describing the application is retrieved. In this embodiment, the subscription manifest includes information that identifies where the application manifest exists. Based on that information, the application manifest is retrieved.

At decision block 507, a determination is made whether an identical version of the application already exists locally. This determination may be performed by parsing the application manifest to identify identification information about the application, and comparing that identification information to applications that are locally installed. If the identical application is already installed, the process executes the locally-stored version of the application at block 517. Otherwise, the process continues to block 509.

At block 509, the components of the application are downloaded. Each component identified in the application manifest may then be downloaded. It will be appreciated that as part of the download process, a description of each component may be compared to descriptions of each component already stored locally and any component that is already stored locally may be omitted from the download.

At block 511, the downloaded components are stored in a local application store. Shared components may be stored in a global or system cache to be made available to multiple applications.

At block 515, the application is registered for subscription. In one implementation, a server component periodically polls for a change in the current published version of a subscribed application. This may be achieved by locating a subscription manifest, maintained by the publisher of the application, and comparing the version of the application identified in the subscription manifest with the currently-installed applications. Based on settings in the subscription, newer versions of the subscribed application may be automatically downloaded to the client computer. In certain cases, such as large applications, a UI may be presented to the user indicating that the download is occurring and providing the progress of the download and install. Finally, at block 517, the locally installed application is executed.

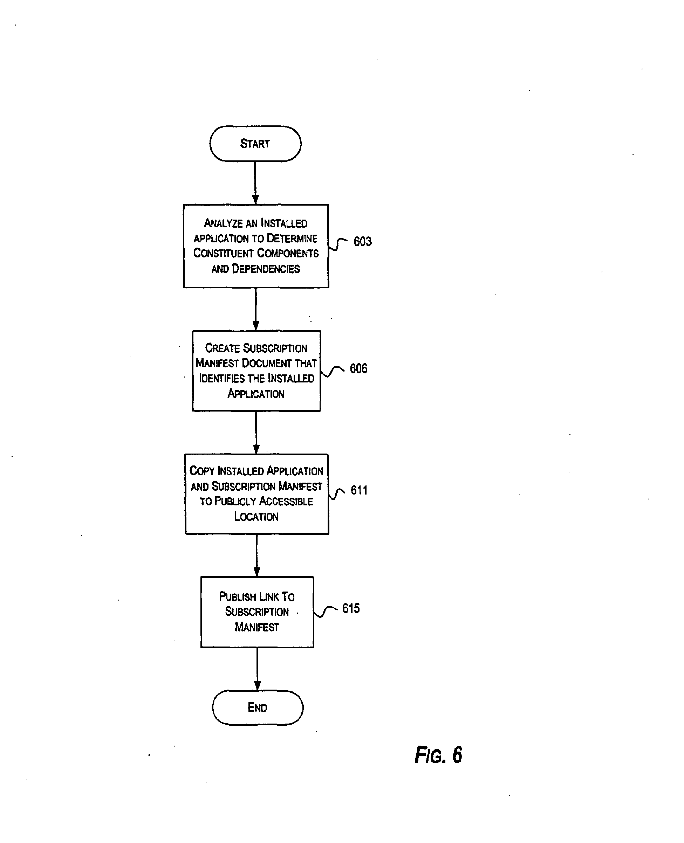

FIGURE 6 is a logical flow diagram generally illustrating a process for making an application self-described and available for download over a network, in accordance with one implementation of the present invention. The process enters when an application publisher or developer indicates a desire to make an application available for download. Processing begins at block 603.

At block 603, an application is analyzed to determine its constituent parts (components) and to identify dependencies among each of the constituent parts. That information may be stored in an application manifest in association with the application.

At block 606, a subscription manifest is created that identifies the installed application and which is made available over a network to users that may desire to download the application. The subscription manifest includes information that uniquely identifies the application, and identifies the location of the application. In one implementation, the subscription manifest includes a URL that points to application manifest corresponding to the application.

At block 611, the application and the subscription manifest are copied to a publicly accessible location for publication over a network. In one implementation, the publicly accessible location may correspond to a public share maintained by Web serving software. In another implementation, the publicly accessible location may correspond to a corporate intranet, or the like.

At block 615, a link to the subscription manifest is published to users that may desire to download the application. For instance, a Web page may be created that includes a link to the subscription manifest. A user that desires to download the application to a client computer may visit the Web page and activate the link. In response, the subscription manifest may be retrieved to the user's client computer. If the client computer is appropriately configured, the application pointed to in the subscription manifest may then be downloaded and installed to the client computer.

The above specification, examples and data provide a complete description of the manufacture and use of the composition of the invention. Since many embodiments of the invention can be made without departing from the spirit and scope of the invention, the invention resides in the claims hereinafter appended.

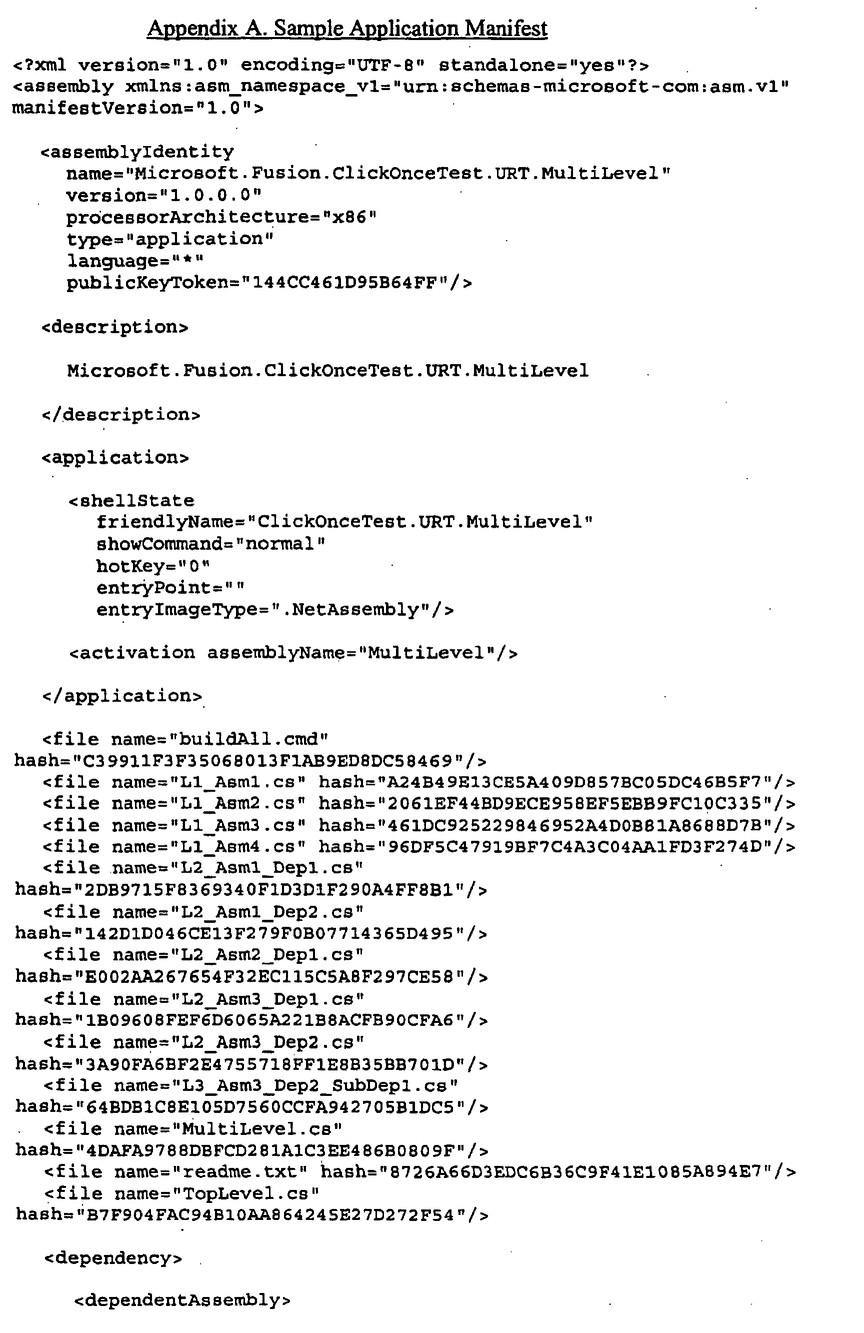

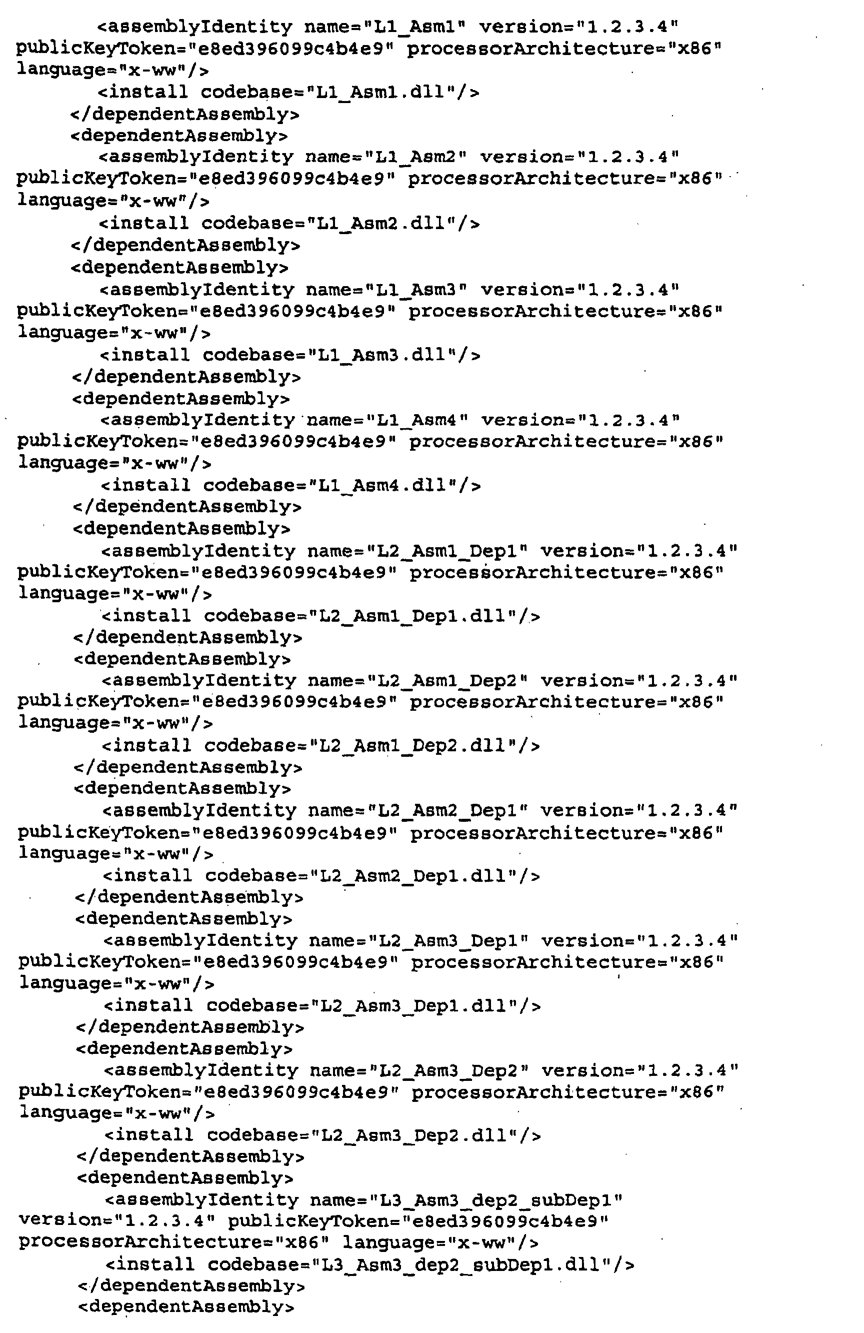

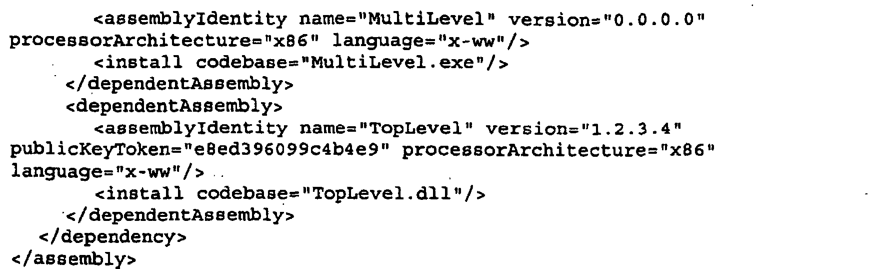

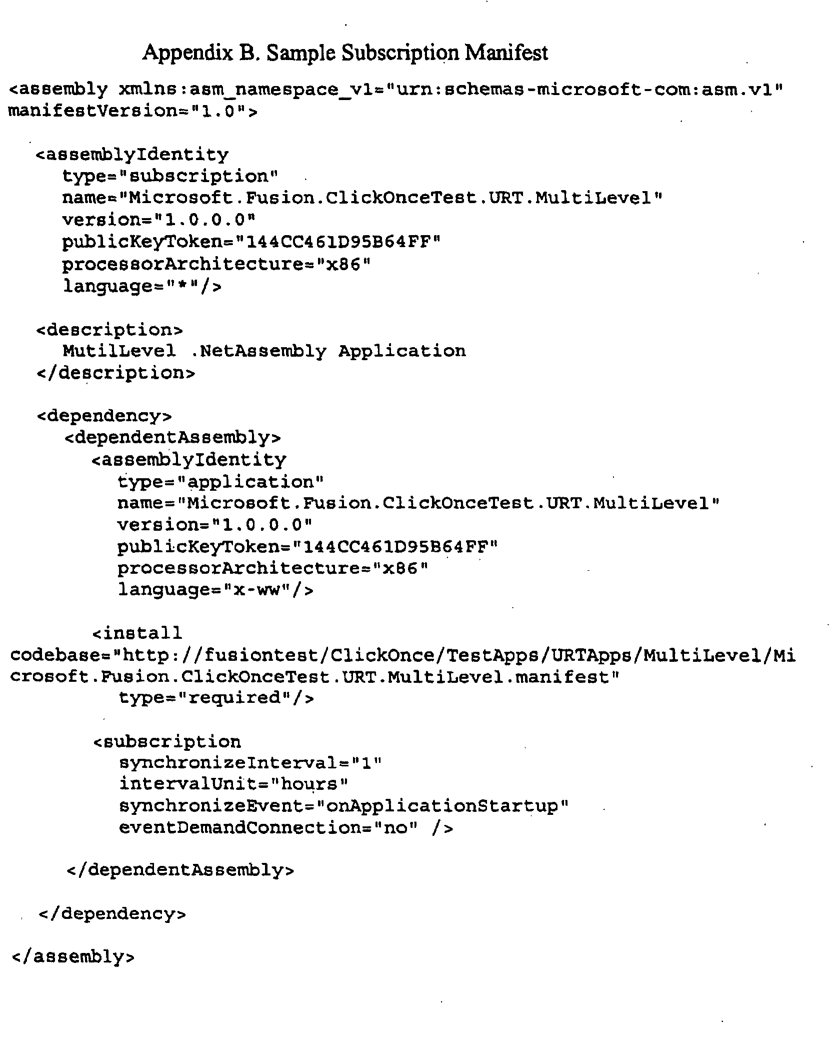

## Claims

1. A computer-readable medium encoded with computer-executable instructions, comprising:
initiating retrieval of a manifest that identifies an application and a location of the application;
downloading components associated with the application to a local data store, each component being sufficiently self-described to distinguish each component from other components; and
registering the application for subscription, wherein subscription further comprises periodically retrieving the subscription manifest to determine if the subscription manifest identifies another application, and if so, repeating the downloading and registering steps for the other application.

2. The computer-readable medium of claim 1, wherein the manifest comprises a subscription manifest.

3. The computer-readable medium of claim 1, wherein the manifest comprises an application manifest.

4. The computer-readable medium of claim 1, wherein initiating the retrieval of the manifest further comprises activating a hyperlink on a Web page associated with downloading the application.

5. The computer-readable medium of claim 1, wherein initiating the retrieval of the manifest further comprises causing, by an automated subscription service, the retrieval of the manifest based on subscription information.

6. The computer-readable medium of claim 5, wherein the subscription information further comprises information identifying applications stored on the local data store for which periodic upgrades have been registered.

7. The computer-readable medium of claim 1, wherein the manifest comprises a subscription manifest, and wherein the instructions further comprise, prior to downloading the components, retrieving an application manifest associated with the application and identified in the subscription manifest, the application manifest including descriptions of each component sufficient to distinguish each component from other components.

8. The computer-readable medium of claim 7, wherein the application manifest further describes dependencies of each component associated with the application.

9. The computer-readable medium of claim 1, wherein at least one of the components comprises a shared component.

10. The computer-readable medium of claim 9, wherein the shared component comprises an assembly.

11. The computer-readable medium of claim 10, wherein the assembly includes a strong name

12. A computer-executable method for installing an application from a remote storage location, comprising:
identifying an application manifest associated with the application, the application manifest including sufficient information to uniquely identify each component of the application; and
downloading the components of the application to a local storage, each component being sufficiently self-described that existing applications that depend on components already installed continue to depend on those already-installed components, and the application depends on the components downloaded in conjunction with the application.

13. The computer-executable method of claim 12, further comprising:
comparing the information in the application manifest against locally installed applications to determine if any components of the application exist in conjunction with a locally installed application, and if so, limiting the download of the components of the application to those that do not already exist in conjunction with a locally installed application.

14. The computer-executable method of claim 12, wherein the components of the application comprise patches to be applied to installed versions of corresponding components, and further comprising limiting the download of the components of the application to the patches.

15. The computer-executable method of claim 14, wherein the subscription manifest further comprises an identification of a location of the application manifest.

16. The computer-executable method of claim 12, wherein identifying the application manifest comprises downloading a subscription manifest that points to the application manifest.

17. The computer-executable method of claim 12, further comprising registering the application to be automatically upgraded in response to a change in a subscription manifest.

18. The computer-executable method of claim 12, further comprising repeating the method in response to a change in a subscription manifest, the subscription manifest being associated with the application.

19. The computer-executable method of claim 18, wherein identifying the application manifest comprises downloading the subscription manifest that points to the application manifest.

20. A computer-readable medium encoded with a data structure, comprising:
a first field including a unique identifier for an application;
a plurality of second fields that identify each component of the application, each component being uniquely distinguishable from other components; and
a plurality of third fields that identify components on which each of the components of the application depends for successful operation.

21. The computer-readable medium of claim 20, wherein the first field further comprises a hash value associated with the application.

22. The computer-readable medium of claim 20, wherein each of the second fields further comprises a hash value associated with a component corresponding to the respective second fields.

23. The computer-readable medium of claim 20, wherein the data structure comprises an XML-based document.

24. The computer-readable medium of claim 20, wherein the dependencies identified in the plurality of third fields identify the depended-upon component by a strong name.

25. The computer-readable medium of claim 24, wherein the dependencies identified in the plurality of third fields identify the depended-upon component by a public key token.
